# EUROPÄISCHE PATENTSCHRIFT

(11) **EP 1 306 325 B1**
(45) Veröffentlichungstag und Bekanntmachung des Hinweises auf die Patenterteilung: **28.12.2005**
(21) Anmeldenummer: 02102475.7
(22) Anmeldetag: 23.10.2002
(51) Int. Cl.: B65G 33/22

(54) **Abgabeschacht für einen Schneckenförderer**
Auger Discharge Chute with Dribble Door
Goulotte de déchargement pour tarières

(30) Priorität: 25.10.2001 US 3976
(43) Veröffentlichungstag der Anmeldung: 02.05.2003
(73) Patentinhaber: DEERE & COMPANY, Moline, Illinois 61265-8098 (US)
(72) Erfinder: Reimer, Mark, J., 52801, Davenport (US); DePoorter, Mark, Charles, 61244, East Moline (US); Herbst, Garrik, W., 52807, Bettendorf (US); Gerber, Edwin, Milton, Hooppole, IL 61258 (US); Begyn, Lawrence, P., 52807, Bettendorf (US)
(74) Vertreter: Holst, Sönke

(56) Entgegenhaltungen:
- US-A- 929 514
- US-A- 1 505 188
- US-A- 4 540 086
- US-A- 5 348 138

## Beschreibung

Die Erfindung betrifft einen Mähdrescher mit einem Schneckenförderer und einem am Abgabeende des Schneckenförderers anbringbaren Abgabeschacht, wobei der Abgabeschacht ein rohrförmiges Element mit einem ersten Ende umfasst, das angepasst ist, am Abgabeende des Schneckenförderers angebracht zu werden.

Ein derartiger Mähdrescher ist beispielsweise in der WO 99/48352 A beschrieben. Der Entladeschneckenförderer wird an dem Mähdrescher genutzt, um Korn aus dem Speicherbehälter des Mähdreschers auf einen benachbarten Kornwagen zu entladen. Das Korn wird an einem ausgeschnittenen Bereich an der unteren Oberfläche des Gehäuses des Schneckenförderers abgegeben. Diese Anordnung der Entladeöffnung an der unteren Oberfläche des Schneckenförderers hat jedoch im Vergleich mit einer Entladeöffnung am äußeren Ende des Gehäuses des Schneckenförderers eine niedrigere Höhe zur Folge. Es ist daher wünschenswert, die Abgabeöffnung am Ende des Entladeschneckenförderers in eine höhere Höhe zu verbringen.

Außerdem verbleibt in den Entladeschneckenförderern in der Regel ein kleiner Betrag an Korn, nachdem der Entladezyklus beendet wurde. Das im Schneckenförderer enthaltene Korn tendiert dahin, langsam aus dem Schneckenförderer zu rieseln, wenn der Mähdrescher über das Feld oder entlang einer Straße transportiert wird. Derartiger Kornverlust ist nicht akzeptabel. Es ist daher wünschenswert, eine Anti-Rieseleinrichtung zu haben, die das Herausrieseln von Korn verhindert, wenn der Fluss des abgegebenen Korns abbricht oder aufhört.

Die US 1 505 188 A beschreibt einen Schneckenförderer zur Förderung von Spänen und Staub in industriellen Anlagen. Am Auslassende ist eine in sich flache Tür angeordnet, die sich durch das Gewicht des Fördergutes öffnet.

Die der Erfindung zu Grunde liegende Aufgabe wird darin gesehen, einen verbesserten Abgabeschacht für einen Entladeschneckenförderer eines Mähdreschers bereitzustellen.

Diese Aufgabe wird erfindungsgemäß durch die Lehren der Patentansprüche 1 und 7 gelöst, wobei in den weiteren Patentansprüchen Merkmale aufgeführt sind, die die Lösung in vorteilhafter Weise weiterentwickeln.

Es wird ein Austragschacht mit einer Rieselverhinderungstür für den Entladeschneckenförderer eines Mähdreschers bereitgestellt. Der Austragschacht umfasst ein rohrförmiges Element mit einem ersten Ende, das angepasst ist, am Abgabeende des Schneckenförderers angebracht zu werden, und einem gegenüberliegenden zweiten Ende, durch das Korn ausgestoßen wird. Eine Rieselverhinderungstür ist innerhalb des rohrförmigen Elements des Austragschachts zwischen einer geöffneten (abgesenkten) und geschlossenen (angehobenen) Positionen schwenkbar gelagert. Sie verhindert, dass Korn aus dem Austragschacht herausrieselt, wenn der Mähdrescher transportiert wird. Die Rieselverhinderungstür hat eine seitlich gekrümmte Oberfläche, die angepasst ist, zusammenpassend an der unteren Oberfläche des rohrförmigen Elements des Abgabeschachts in Eingriff zu gelangen, wenn die Rieselverhinderungstür in die abgesenkte Position bewegt ist.

Die Rieselverhinderungstür umfasst gegenüberliegende, gekrümmte Kanten, die mit der inneren Wand des rohrförmigen Elements in zusammenpassenden oder abdichtenden Eingriff gelangen, wenn sich die Rieselverhinderungstür in der abgehobenen Position befindet.

Ein federvorgespanntes Scharnier haltert die Rieselverhinderungstür an dem rohrförmigen Element des Abgabeschachts, um die Rieselverhinderungstür normalerweise in die angehobene Position vorzuspannen.

Das rohrförmige Element hat vorzugsweise eine obere Oberfläche, die unter einem ersten Winkel zur Produktabgabe endet, und eine untere Oberfläche, die zur nach unten gerichteten Produktabgabe unter einem zweiten Winkel endet. Gegenüber einer horizontalen Ebene ist der erste Winkel des Abgabeschachts größer als der zweite Winkel.

In den Zeichnungen ist ein nachfolgend näher beschriebenes Ausführungsbeispiel der Erfindung dargestellt. Es zeigt:
- Fig. 1: eine vergrößerte seitliche Ansicht eines Abgabeschachts mit einer Rieselverhinderungstür,
- Fig. 2: eine rückwärtige Ansicht des Abgabeschachts entlang der Linien 2-2 der Figur 1,
- Fig. 3: eine perspektivische Ansicht der Rieselverhinde rungstür,
- Fig. 4: eine seitliche Ansicht der Rieselverhinderungstür,
- Fig. 5: eine Frontansicht der Rieselverhinderungstür, und
- Fig. 6: eine perspektivische Ansicht eines Mähdreschers mit einem Entladeschneckenförderer, woran die Abgabeeinrichtung angebracht ist.

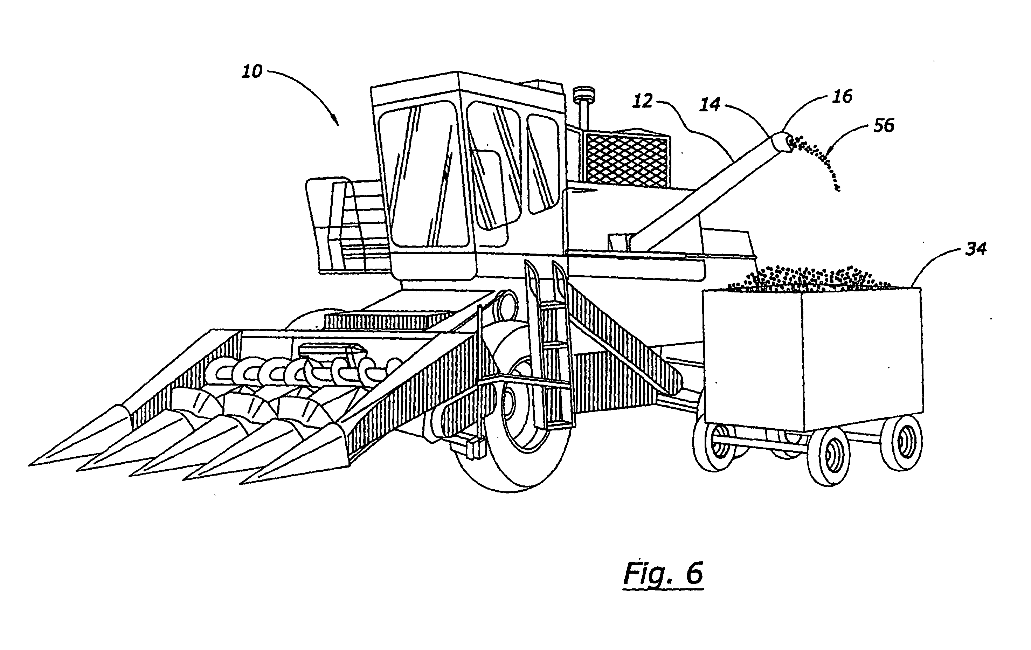

Ein konventioneller Mähdrescher 10 umfasst einen Entladeschneckenförderer 12, wie er in Figur 6 gezeigt ist. Der Entladeschneckenförderer 12 hat ein Einlassende, das sich zur Aufnahme von Korn aus dem Kornspeicherbehälter des Mähdreschers 10 in den Mähdrescher 10 hinein erstreckt. Der Entladeschneckenförderer 12 hat außerdem ein gegenüberliegendes Abgabeende 14. Der Mähdrescher 10 und der Entladeschneckenförderer sind konventionell und sind nicht Gegenstand der vorliegenden Erfindung.

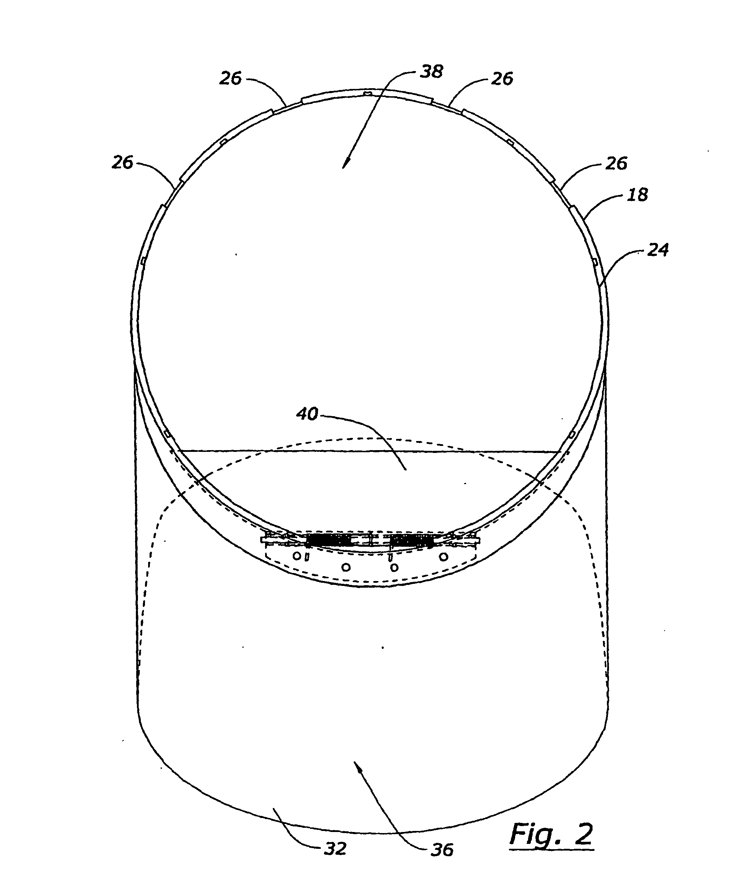

Die vorliegende Erfindung bezieht sich auf einen Abgabeschacht 16, der am Abgabeende 14 des Entladeschneckenförderers 12 befestigt ist. Der Abgabeschacht 16 ist vorzugsweise aus gehärtetem Kunststoff hergestellt, es können aber auch andere Materialien, einschließlich Metall, verwendet werden. Der Abgabeschacht 16 ist im Wesentlichen ein nach unten gekrümmtes, rohrförmiges Element mit gegenüberliegenden ersten und zweiten Enden 18, 20. Wie in Figur 2 erkennbar ist, ist das erste Ende 18 im Querschnitt rund für einen zusammenpassenden Eingriff mit dem Abgabeende 14 des Entladeschneckenförderers 12. Das erste Ende 18 umfasst einen Kragen 22, der vorzugsweise geringfügig kleiner im Durchmesser ist als das Abgabeende 14 des Schneckenförderers 12, so dass der Kragen 22 gleitend in das Abgabeende 14 des Schneckenförderers 12 passen wird. Ein Bördelrand 24 erstreckt sich um den Kragen 22 herum, um eine Reibungspassung mit der Innenseite des Abgabeendes 14 des Schneckenförderers 12 bereitzustellen. Schlitze 26 sind im Kragen 22 bereitgestellt, um es dem Kragen 22 zur Erleichterung der Anbringung des Abgabeschachts 14 auf dem Schneckenförderer 12 zu ermöglichen, geringfügig auszuweichen. Löcher 28 im Kragen sind angepasst, Befestigungselemente, wie Schrauben, Bolzen oder Stifte aufzunehmen, die sich durch das Abgabeende 14 des Schneckenförderers 12 erstrecken, um den Abgabeschacht 16 am Schneckenförderer 12 zu sichern.

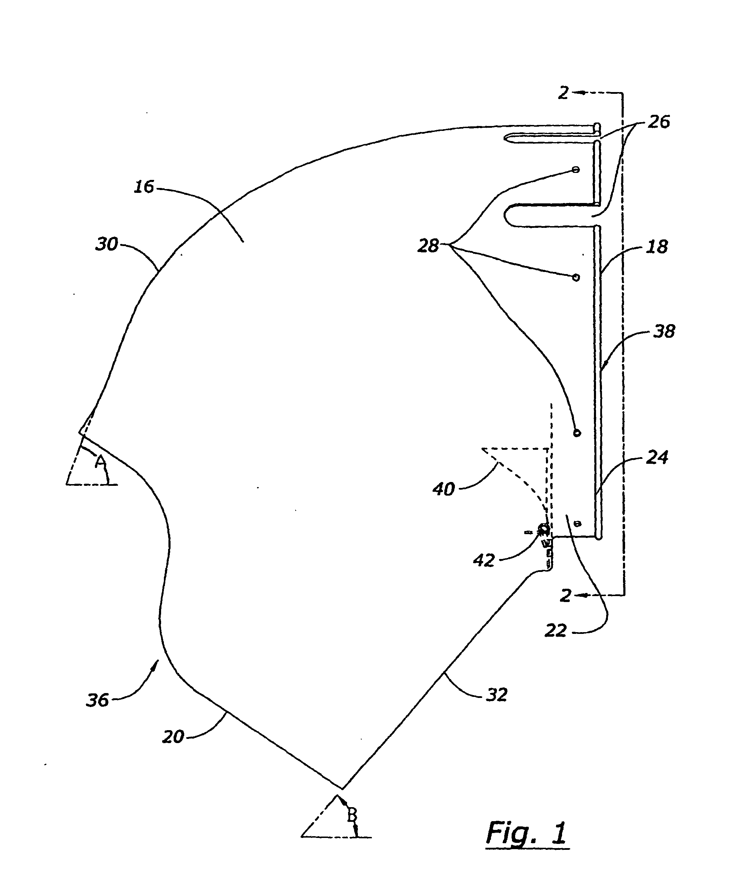

Das rohrförmige Element, das den Abgabeschacht 16 bildet, hat eine gekrümmte obere Oberfläche 30, die unter einem ersten Winkel A gegenüber einer horizontalen Fläche endet. Das rohrförmige Element hat eine untere Oberfläche 32, die unter einem zweiten Winkel B gegenüber einer horizontalen Ebene endet. Die Winkel A und B sind in der Figur 1 der Zeichnungen gezeigt. Der Winkel A ist größer als der Winkel B, so dass die obere Oberfläche 30 das abgegebene Korn nach unten leitet, und die untere Oberfläche 32 ein maximales Abdecken des abgegebenen Korns erlaubt. Vorzugsweise ist die untere Oberfläche 32 im Wesentlichen flach, um einen maximalen Abstand vom Abgabeschacht 16 bereitzustellen, wenn ein Kornwagen oder Anhänger 34 in seine Position neben dem Schneckenförderer 12 bewegt wird, wie in Figur 6 erkennbar. Mit ansteigendem Winkel B sinkt der Abstand vom Abgabeschacht 16. Auch sinkt mit sinkendem Winkel B die Höhe der Abgabeöffnung 36 des Abgabeschachts 16. Wie in den Figuren 1 und 2 erkennbar ist, bleibt die Querschnittsform der Abgabeöffnung 36 nicht rund, wie am ersten Ende 18 des Abgabeschachts 16, da die unteren und oberen Oberflächen 30, 32 des Abgabeschachts 16 nicht parallel zueinander sind. Da der Winkel A größer als der Winkel B ist, ist die Höhe der Abgabeöffnung 36 am zweiten Ende 20 des Abgabeschachts 16 kleiner als die Höhe der Einlassöffnung 38 am ersten Ende 18 des Abgabeschachts 16, wie in Figur 2 erkennbar.

Während die untere Oberfläche 32 in der Figur 1 im Wesentlichen flach oder linear dargestellt ist, ist anzumerken, dass die untere Oberfläche 32 alternativ gekrümmt sein könnte, während ein Abgabewinkel B, der kleiner als der Abgabewinkel A der Oberfläche 30 ist, aufrechterhalten wird.

Das Abgaberohr 16 umfasst eine Rieselverhinderungstür 40, die innerhalb des rohrförmigen Elements befestigt ist. Wie am Besten anhand der Figur 1 erkennbar ist, ist die Rieselverhinderungstür 40 im Abgabeschacht 16 nahe dessen ersten Endes 18 durch ein Scharnier 42 befestigt. Das Scharnier 42 umfasst eine Feder 44, so dass die Rieselverhinderungstür 40 zwischen einer angehobenen Position, wie in Figur 1 dargestellt, und einer abgesenkten Position schwenkbar ist. Die Feder 44 spannt die Rieselverhinderungstür 40 normalerweise in die nach oben gerichtete Position vor. Das Scharnier 42 ist durch eine Scharnierplatte 46, die am Abgabeschacht 16 auf irgendeine geeignete Art befestigt ist, die ausgerichteten, schwenkbaren Rohre 48, 50 an der Scharnierplatte 46, durch die Rieselverhinderungstür 40 und durch den Scharnierstift 52 definiert, der sich durch die Rohre 48, 50 erstreckt.

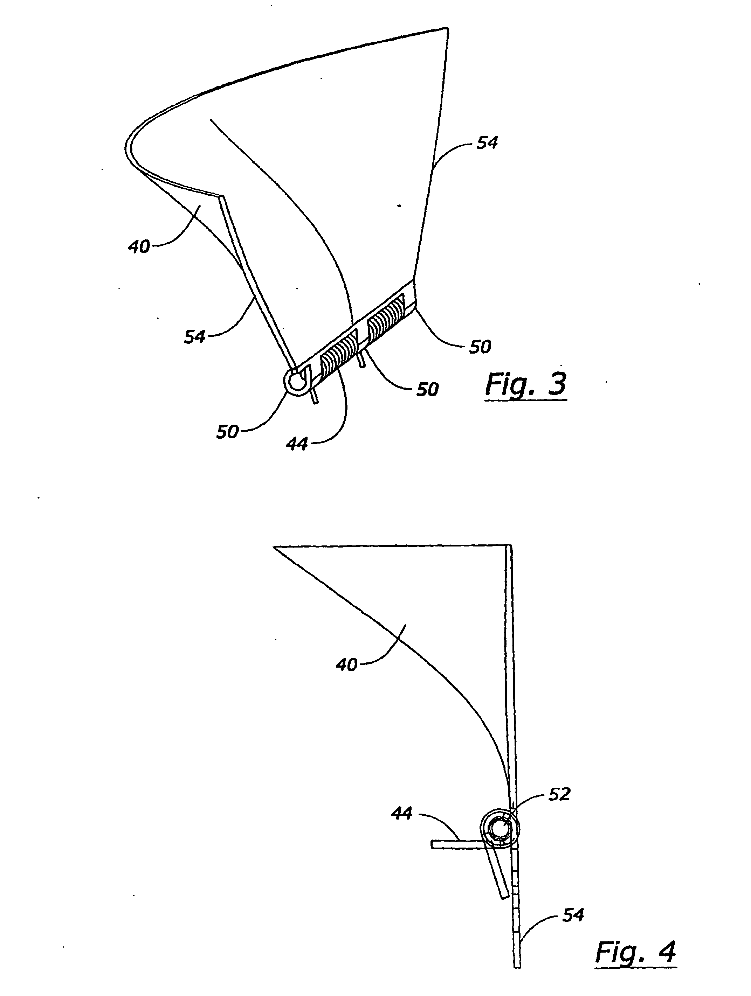

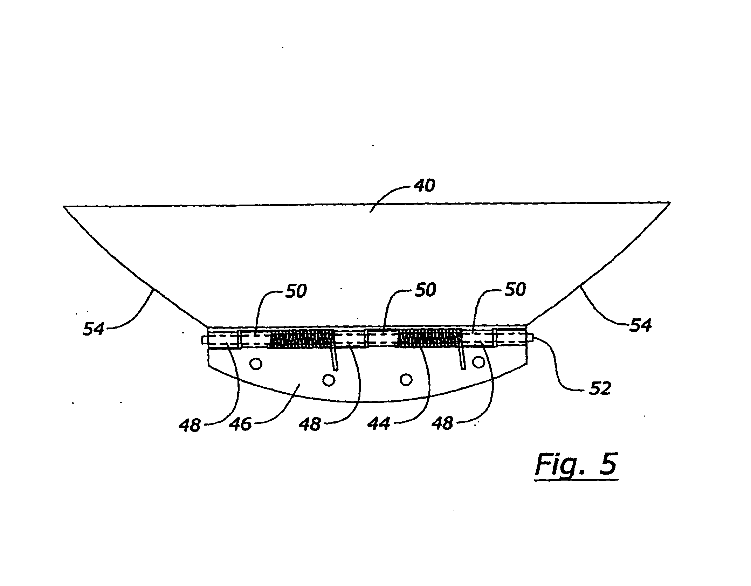

Die Rieselverhinderungstür 40 hat gegenüberliegende Seiten 54, die nach oben gekrümmt sind, wie in Figur 5 erkennbar, um zusammenpassend mit einem Bereich an der Seitenwand des Abgabeschachts 16 in Eingriff zu gelangen, wenn sich die Rieselverhinderungstür 40 in der aufrechten Position befindet. Die Rieselverhinderungstür 40 ist auch von Seite zu Seite gekrümmt, wie am Besten in Figur 3 erkennbar ist, um zusammenpassend mit der unteren Oberfläche 32 des Abgabeschachts 16 in Eingriff zu gelangen, wenn die Rieselverhinderungstür 40 in die erniedrigte Position bewegt wird.

Bei der Verwendung leitet der Abgabeschacht 16 Korn 56, das vom Entladeschneckenförderer 12 abgegeben wird, nach unten in den Kornwagen 34. Das abgegebene Korn 56 schwenkt die Rieselverhinderungstür 40 nach unten, so dass die Rieselverhinderungstür 40 den Fluss des abgegebenen Korns 56 nicht einschränkt. Wenn der Schneckenförderer 12 abgeschaltet wird, so dass es keine Rotation der inneren Mitnehmer (nicht gezeigt) gibt, bricht der Fluss des Korns 56 ab, so dass die Rieselverhinderungstür 40 durch die Vorspannung der Feder 44 in ihre aufrechte Position zurück gebracht wird. Die Rieselverhinderungstür verhindert somit Kornrieseln, wenn der Schneckenförderer 12 nicht betätigt wird, zum Beispiel, wenn der Mähdrescher 10 sich über das Feld bewegt oder entlang einer Straße transportiert wird.

## Patentansprüche

1. Mähdrescher (10) mit einem Schneckenförderer (12) und einem am Abgabeende (14) des Schneckenförderers (12) anbringbaren Abgabeschacht (16), wobei der Abgabeschacht (16) ein rohrförmiges Element mit einem ersten Ende (18) umfasst, das angepasst ist, am Abgabeende (14) des Schneckenförderers (12) angebracht zu werden, **gekennzeichnet durch** eine Rieselverhinderungstür (40), die innerhalb des rohrförmigen Elements zwischen einer geschlossenen und einer geöffneten Position schwenkbar angebracht ist und eine gekrümmte Oberfläche hat, um in der geöffneten und/oder geschlossenen Position zusammenpassend an einer benachbarten Oberfläche des rohrförmigen Elements anzugreifen.

2. Mähdrescher (10) nach Anspruch 1, **dadurch gekennzeichnet, dass** die Rieselverhinderungstür zwischen einer angehobenen und einer abgesenkten Position beweglich ist.

3. Mähdrescher (10) nach Anspruch 1 oder 2, **dadurch gekennzeichnet, dass** die Rieselverhinderungstür (40) nahe des ersten Endes (18) des rohrförmigen Elements angebracht ist.

4. Mähdrescher (10) nach einem der Ansprüche 1 bis 3, **dadurch gekennzeichnet, dass** die Rieselverhinderungstür (40) stromauf des zweiten Endes (20) des rohrförmigen Elements angebracht ist.

5. Mähdrescher (10) nach einem der Ansprüche 1 bis 4, **gekennzeichnet durch** eine Feder (44), die normalerweise die Rieselverhinderungstür (40) in die geschlossene Position verbringt.

6. Mähdrescher (10) nach einem der vorhergehenden Ansprüche, **dadurch gekennzeichnet, dass** das rohrförmige Element eine obere Oberfläche (30) und eine untere Oberfläche (32) hat, wobei die obere Oberfläche (30) zur Produktabgabe nach unten unter einem ersten Winkel (A) endet, die untere Oberfläche (32) zur Produktabgabe nach unten unter einem zweiten Winkel (B) endet, und der erste Winkel (A) gegenüber einer horizontalen Fläche größer als der zweite Winkel (B) ist.

7. Mähdrescher (10) nach einem der Ansprüche 1 bis 6, **dadurch gekennzeichnet, dass** die obere Oberfläche (30) des rohrförmigen Elements gekrümmt ist.

8. Mähdrescher (10) nach einem der Ansprüche 1 bis 7, **dadurch gekennzeichnet, dass** die untere Oberfläche (32) des rohrförmigen Elements im Wesentlichen flach ist.

9. Mähdrescher (10) nach einem der vorhergehenden Ansprüche, **dadurch gekennzeichnet, dass** das zweite Ende (20) des rohrförmigen Elements in der Nähe der unteren Oberfläche (32) breiter ist als in der Nähe der oberen Oberfläche (30).

10. Mähdrescher (10) nach einem der vorhergehenden Ansprüche, **dadurch gekennzeichnet, dass** die Öffnung des ersten Endes (18) des rohrförmigen Elements eine größere Höhe hat als die Öffnung des zweiten Endes (20) des rohrförmigen Elements.

## Claims

1. Combine harvester (10) having an auger (12) and a discharge chute (16) which can be mounted on the discharge end (14) of the augur (12), the discharge chute (16) comprising a tubular member having a first end (18) which is adapted to be mounted on the discharge end (14) of the auger (12), **characterised by** a dribble door (40), which is mounted within the tubular member able to pivot between a closed and an opened position and has a curved surface, in order to engage in the opened and/or closed position in a mating manner on an adjacent surface of the tubular member.

2. Combine harvester (10) according to claim 1, **characterised in that** the dribble door is moveable between a raised and a lowered position.

3. Combine harvester (10) according to claim 1 or 2, **characterised in that** the dribble door (40) is mounted close to the first end (18) of the tubular member.

4. Combine harvester (10) according to one of the claims 1 to 3, **characterised in that** the dribble door (40) is mounted upstream of the second end (20) of the tubular member.

5. Combine harvester (10) according to one of the claims 1 to 4, **characterised by** a spring (44), which normally moves the dribble door (40) into the closed position.

6. Combine harvester (10) according to one of the preceding claims, **characterised in that** the tubular member has an upper surface (30) and a lower surface (32), the upper surface (30) ending at a first angle (A) for downward product discharge, the lower surface (32) ending at a second angle (B) for downward product discharge, and the first angle (A) being larger than the second angle (B) relative to a horizontal plane.

7. Combine harvester (10) according to one of the claims 1 to 6, **characterised in that** the upper surface (30) of the tubular member is curved.

8. Combine harvester (10) according to one of the claims 1 to 7, **characterised in that** the lower surface (32) of the tubular member is substantially flat.

9. Combine harvester (10) according to one of the preceding claims, **characterised in that** the second end (20) of the tubular member is wider close to the lower surface (32) than close to the upper surface (30).

10. Combine harvester (10) according to one of the preceding claims, **characterised in that** the opening of the first end (18) of the tubular member has a greater height than the opening of the second end (20) of the tubular member.

## Revendications

1. Moissonneuse-batteuse (10) avec une vis de transport (12) et une goulotte de déversement (16) pouvant être montée sur l'extrémité de déversement (14) de la vis de transport (12), la goulotte de déversement (16) comportant un élément tubulaire avec une première extrémité (18) qui est adaptée pour être montée sur l'extrémité de déversement (14) de la vis de transport (12), **caractérisée par** une porte anti-dispersion (40), qui peut être montée à l'intérieur de l'élément tubulaire de manière à pouvoir pivoter entre une position fermée et une position ouverte et qui a une surface incurvée afin de pouvoir, dans la position fermée et/ou ouverte, entrer en contact de manière ajustée avec une surface adjacente de l'élément tubulaire.

2. Moissonneuse-batteuse (10) selon la revendication 1, **caractérisée en ce que** la porte anti-dispersion est mobile entre une position haute et une position basse.

3. Moissonneuse-batteuse (10) selon la revendication 1 ou 2, **caractérisée en ce que** la porte anti-dispersion (40) est disposée à proximité de la première extrémité (18) de l'élément tubulaire.

4. Moissonneuse-batteuse (10) selon l'une quelconque des revendications 1 à 3, **caractérisée en ce que** la porte anti-dispersion (40) est agencée en amont de la deuxième extrémité (20) de l'élément tubulaire.

5. Moissonneuse-batteuse (10) selon l'une quelconque des revendications 1 à 4, **caractérisée par** un ressort (44) qui, normalement, amène la porte anti-dispersion (40) dans la position fermée.

6. Moissonneuse-batteuse (10) selon l'une quelconque des revendications précédentes, **caractérisée en ce que** l'élément tubulaire comporte une surface supérieure (30) et une surface inférieure (32), la surface supérieure (30) se terminant en formant un premier angle (A) pour le déversement des produits vers le bas, la surface inférieure (32) se terminant en formant un deuxième angle (B) pour le déversement des produits vers le bas, et le premier angle (A), considéré par rapport à une surface horizontale, est plus grand que le deuxième angle (B).

7. Moissonneuse-batteuse (10) selon l'une quelconque des revendications 1 à 6, **caractérisée en ce que** la surface supérieure (30) de l'élément tubulaire est incurvée.

8. Moissonneuse-batteuse (10) selon l'une quelconque des revendications 1 à 7, **caractérisée en ce que** la surface inférieure (32) de l'élément tubulaire est sensiblement plate.

9. Moissonneuse-batteuse (10) selon l'une quelconque des revendications précédentes, **caractérisée en ce que** la deuxième extrémité (20) de l'élément tubulaire est plus large à proximité de la surface inférieure (32) qu'à proximité de la surface supérieure (30).

10. Moissonneuse-batteuse (10) selon l'une quelconque des revendications précédentes, **caractérisée en ce que** l'ouverture de la première extrémité (18) de l'élément tubulaire est plus haute que l'ouverture de la deuxième extrémité (20) de l'élément tubulaire.
